Europäisches Patentamt

European Patent Office

Office européen des brevets

(11) Publication number: **0 102 723**
**A1**

## (12) EUROPEAN PATENT APPLICATION

(21) Application number: 83304157.7

(22) Date of filing: 18.07.83

(51) Int. Cl.³: **F 02 M 51/06**
F 02 M 51/08, F 02 M 61/16
F 16 K 31/06

(30) Priority: 29.07.82 GB 8221972

(43) Date of publication of application:
14.03.84 Bulletin 84/11

(84) Designated Contracting States:
DE FR IT

(71) Applicant: LUCAS INDUSTRIES public limited company
Great King Street
Birmingham, B19 2XF(GB)

(72) Inventor: Kenning, John Herbert
12 Vesey Road
Sutton Coldfield West Midlands, B73 5NZ(GB)

(74) Representative: Carpenter, David et al,
Marks & Clerk Alpha Tower Suffolk Street Queensway
Birmingham B1 1TT(GB)

(54) Plate type fuel injector.

(57) A plate-type electromagnetic fuel injector having a spacer (27) against which the armature (24) of the electromagnet (13, 17) abuts, said spacer (27) being formed from a material which is non-magnetic, electrically insulating and dimensionally stable when subject to, and able to withstand, repeated impact loading by the armature of the electromagnet.

EP 0 102 723 A1

./...

Croydon Printing Company Ltd.

FIG.1.

FIG.2.

This invention relates to plate-type electromagnetically operated fuel injectors for internal combustion engines.

In a plate-type electromagnetic fuel injector the closure member is in the form of a plate or disc formed in a material such that it constitutes the armature of the electromagnet of the injector.

It has been recognised by the applicant that it is desirable to provide a break in the magnetic circuit which exists when the electromagnet of the injector is energised, the break being in the form of a non-magnetic spacer against which the armature of the electromagnet abuts. The break in the magnetic circuit minimizes the risk of the armature remaining in its "energised" position when the electromagnet is de-energised, and thus improves the "drop-out" characteristic of the injector. Additionally the use of a non-magnetic spacer enables a simple electrical drive circuit to be used, since the improvement in the electromagnetic characteristics of the injector minimises the need for drive circuitry having accurate pulse shaping as is necessary in certain known injectors in order to achieve accurate control over opening and closing (pull-in and drop-out) of the injector. The applicant has used stainless steel to produce the non-magnetic spacer, but has found that this approach is unsatisfactory in that the repeated impact of the armature on the spacer seems to impare the non-magnetic properties of the stainless steel. It is thought that the repeated impacts convert a proportion of the austenite (non-magnetic) of the stainless steel into martensite (magnetic) with the result that some at least of the benefits of a non-magnetic spacer are lost.

It will be recognised that engagement of the armature closure member with the spacer controls the position of the armature/closure member in the energised condition of the electromagnet. The energised condition is normally the open condition and the degree of movement of the member from its closed to its open position is critical to the operating characteristics of the injector. It follows therefore that after accurate setting of the gap which exists between the spacer and the member in the de-energised condition the gap should not alter in use of the injector.

In order to overcome the problems encountered with stainless steel a beryllium-copper alloy spacer was utilized. While this spacer does not become magnetic in use, it suffers from the problem that it is deformed by repeated impacts of the armature thus varying the critical gap. It is an object of the present invention to provide an electromagnetically operated fuel injector of the plate-type wherein these problems are minimized.

A plate-type electromagnetic fuel injector according to the present invention includes a spacer against which the armature of the electromagnet abuts, said spacer being formed from a material which is non-magnetic, electrically insulating, resultant to attack bythe fuel, and dimensionally stable when subject to, and able to withstand, repeated impact loading by the armature of the electromagnet.

The use of an electrically insulating material has additional advantages in that it reduces eddy current losses in the valve, thus speeding up both the pull-in and drop-out characteristics of the injector. Such improvement of the drop-out characteristic permits a weaker armature return spring to be utilized thus further speeding-up the pull-in characteristic (opening) of the injector.

Preferably the spacer is formed from a synthetic resin material.

Desirably the synthetic resin material is a film-type polyester.

Conveniently the synthetic resin material is a film-type polyester having a repeat unit of $C_{10} H_8 O_4$ which is resistant to attack by petroleum hydrocarbon fuels and which is non-malleable in use.

Desirably the film-type polyester is polyethylene-terephthalate.

Alternatively the synthetic resin spacer is formed from a so-called "paper" formed of an aromatic polyamide, conveniently that material sold under the Trade Name "NOMEX".

One example of the invention is illustrated in the accompanying drawings, wherein:-

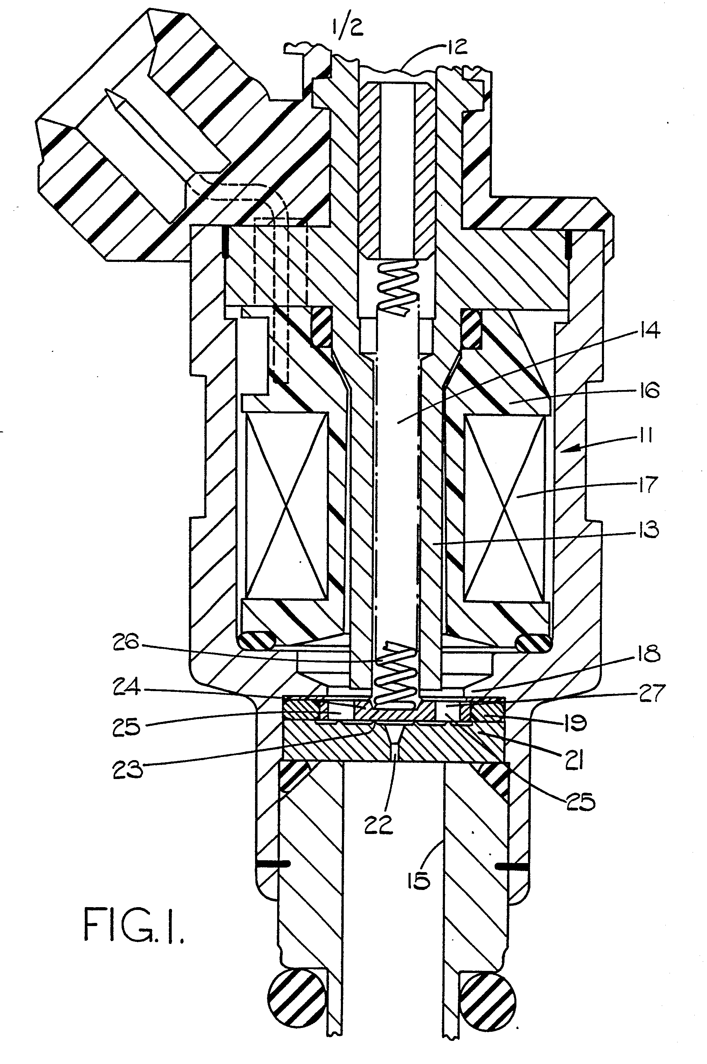

Figure 1 is a longitudinal sectional view of an electromagnetic fuel injector for an internal combustion engine;

Figure 2 is an enlargement of part of Figure 1; and

Figure 3 is a plan view of a spacer shown in section in Figures 1 and 2.

Referring to the drawings, the fuel injector is an electromagnetic valve of the plate-type, that is to say having a plate or disc-like member as its closure member, the closure member also being the armature of the electromagnet of the injector.

The injector comprises a hollow, generally cylindrical outer body 11 formed from steel and having a fuel inlet 12 at one end thereof. Within the body 11 is a hollow steel core 13 having extending therethrough a passage 14 which connects the inlet 12 with an outlet 15 of the body 11. Encircling the core 13 within the body 11 is a moulded synthetic resin coil former 16 upon which is wound an electromagnet winding 17. The winding 17 thus encircles the core 13. Adjacent the outlet 15 the body 11 defines an integral, radially inwardly extending circumferential shoulder 18 against which a steel annulus 19 is trapped by a steel valve seat member 21. The valve seat member 21 is in the form of a disc the diameter of which is equal to the internal diameter of the body 11, the disc 21 having a centrally disposed fuel flow passage or metering orifice 22. The core 13 terminates short of the valve seat member 21 and the face of the member 21 presented to the end of the core 13 is shaped to provide an annular land 23 encircling the end of the passage 22. Positioned within the annulus 19 between the member 21 and the end of the core 13 is the closure member 24 of the injector. The closure member 24 (which is also the armature of the electromagnet 13, 17) is in the form of a steel disc slidably received within the annulus 19 and having extending therethrough a plurality of bores 25 arranged in a circular row about the central axis of the disc. The diameter of the circular row of bores 25 is greater than the diameter of the land 23 on the face of the member 21, and a compression spring 26 housed within the core 13 urges the closure member 24 into engagement with the land 23 on the face of the valve seat member 21. This is the closed position of the injector since engagement of the member 24 with the land 23 prevents flow of fuel between the inlet 12 and outlet 15 of the body 11.

The internal diameter of the shoulder 18 is less than the internal diameter of the annulus 19, and thus the shoulder 18 overlies the outer peripheral region of the closure member 24. The thickness of the closure member 24 is less than the thickness of the annulus 19 by a predetermined amount to permit the closure member 24 to move by said predetermined amount from the closed position to an open position where the closure member is arrested by the shoulder 18. In this position, which is achieved by energising the winding 17 so that the member 24 is magnetically attracted to the core 13, fuel can flow through the passage of the core 13, across the upper face of the closure member 24, through the bores 25 of the closure member 24, beneath the closure member 24 over the top of the land 23, and through the passage 22 of the valve seat member 21 to the outlet 15.

When the electromagnet winding 17 is de-energised the spring 26 returns the closure member 24 to its closed position in engagement with the land 23 of the valve seat member 21.

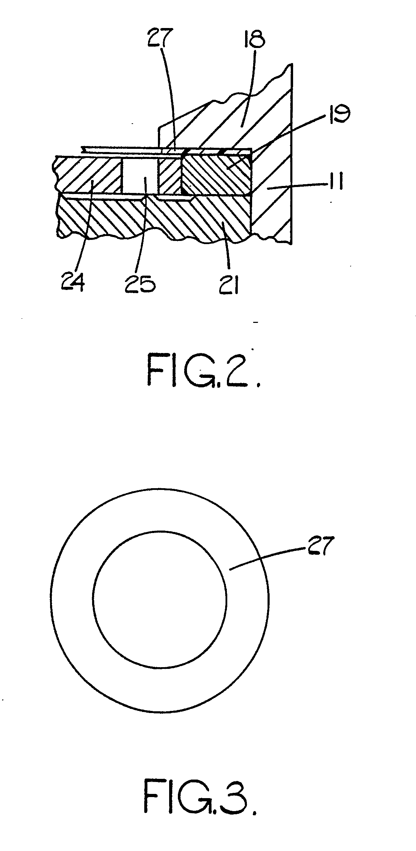

In order to ensure that the closure member 24 returns quickly to its closed position when the electromagnet winding 17 is de-energised a non-magnetic spacer 27 is placed between the shoulder 18 and the closure member 24 (see Figure 2). The spacer 27 thus prevents contact between the steel closure member 24 and the steel shoulder 18, and thus improves the "drop-out" characteristic of the electromagnet of the valve. Additionally therefore a simple drive circuit for the electromagnet can be utilized since accurate drive pulse shaping is not essential. The non-magnetic spacer 27 is in the form of an annulus of a film-type polyester synthetic resin material and is trapped in place against the shoulder 18 by being trapped between the shoulder 18 and the annulus 19. The electrical insulation characteristic of the spacer 27 is found to minimise eddy current losses in the iron circuit of the electromagnet, and thus is found to improve the "drop-out" characteristic of the electromagnet. The improved "drop-out" characteristic in turn permits a weaker spring 26 to be utilized than would otherwise have been the case, and the use of a weaker spring of course improves the "pull-in" characteristic.

It will be recognised that the actual material from which the spacer 27 is constructed must fulfil certain requirements. Firstly the material must be resistant to the petroleum hydrocarbon fuels which the injector is to control. The material must also be non-magnetic and electrically insulating. Furthermore, the material must be dimensionally stable when subjected repeatedly to the impact of the closure member 24 in use, that is to say the material must be non-malleable, in use. The distance through which the closure member 24 is permitted to move relative to the core 13 is a critical factor in a fuel injector. Clearly therefore if the material of the spacer 27 is not dimensionally stable when subject to repeated impact, and, for example, the spacer is caused to become thinner, then the distance through which the closure member 24 is permitted to move will increase, and correspondingly the gap between the closure member and the core 13 in the energised position will be reduced. Such variations are not acceptable in fuel injectors. As well as being dimensionally stable in relation to repeated impacts, the dimensional stability must be retained over a suitable temperature range bearing in mind the environment of the injector. Thus in a fuel injector for an internal combustion engine the material of the spacer 27 must be dimensionally stable over the range -40°C to 170°C.

Since the spacer member 27 is desirably very thin (conveniently no great than 0.006 inches), it is convenient to manufacture the spacer 27 from a film-forming synthetic resin material. Amongst those materials which are suitable for use in an injector for petroleium hydrocarbon fuel are the polyester films sold under the Trade Names "MYLAR", "MELINEX", and "HOSTOPHAN".

There may be other synthetic resin materials from which the spacer 27 could be produced. A suitable material will fulfil the following criteria. It will be magnetically and electrically non-conductive, it will be inert with respect to the relevant fuel, primarily petroleum hydrocarbon fuels, and it will be non-malleable in use. A suitable test for resistance to attack by petroleum fuel is to immerse the spacer in ASTM Reference fuel C (i.e. iso-octane/ toluene) at 60°C for 240 hours. A satisfactory spacer material will survive this test without evidence of cracking, crazing, softening or embrittlement and with a percentage weight change not exceeding 2.5%, and will also survive a 3 month immersion at 21°C with a weight change not exceeding 1.0%.

A suitable test for non-malleability in use is to construct an injector using a material to be tested and to subject the injector to 500 million cycles of operation (opening and closing being one cycle). The spacer material can be said to be sufficiently non-malleable if the calibration of the injector does not change significantly during the test.

The film-type polyester "MYLAR" which is well suited to constitute the spacer 27 is polyethylene terephthalate, a film-type polyester having a repeat unit of $C_{10} H_8 O_4$. The repeat unit molecular weight is 192 but a typical commercial polymer having this repeat unit would have a molecular weight average between 20,000 and 30,000.

Other suitable materials exist and, for example, it is believed that other olefin derivatives of an alkyl ester of terephthalic acid may be suitable. Also it is believed that other materials such as certain aromatic polyamide "papers" for example "NOMEX" may pass the tests set out above.

CLAIMS:

1. A plate-type electromagnetic fuel injector characterized in that there is provided a spacer (27) against which the armature (24) of the electromagnet (13,17) abuts, said spacer (27) being formed from a material which is non-magnetic, electrically insulating, resultant to attack by the fuel and dimensionally stable when subject to, and able to withstand, repeated impact loading by the armature of the electromagnet.

2. An injector as claimed in claim 1, characterized in that the spacer (27) is formed from a synthetic resin material.

3. An injector as claimed in claim 2, characterized in that the synthetic resin material is a film-type polyester.

4. An injector as claimed in claim 2, characterized in that the synthetic resin material is a film-type polyester having a repeat unit of $C_{10} H_8 O_4$ which is resistant to attack by petroleum hydrocarbon fuels and which is non-malleable in use.

5. An injector as claimed in claim 4, characterized in that the film-type polyester is polyethylene-terephthalate.

6. An injector as claimed in claim 2, characterized in that the synthetic resin is a so-called "paper" formed of an aromatic polyamide.

0102723

FIG.I.

0102723

FIG.2.

FIG.3.

0102723

**European Patent Office**

## EUROPEAN SEARCH REPORT

Application number

EP 83 30 4157

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | EP-A-0 026 060 (LUCAS) <br> * Whole document * | 1,2 | F 02 M 51/06 <br> F 02 M 51/08 <br> F 02 M 61/16 <br> F 16 K 31/06 |
| Y | DE-A-1 576 463 (BOSCH) <br> * Page 4, lines 15-23; claims 15, 16; figure 1 * | 1,2 | |
| Y | Patent Abstracts of Japan Vol. 4, no. 72, 27 May 1980 Page 61 M 13 & JP-A-55-35135 | 1,2 | |
| A | DE-A-2 942 853 (BENDIX) <br> * Page 17, lines 5-20; figure 2 * | 1 | |

TECHNICAL FIELDS
SEARCHED (Int. Cl. ³)

F 02 M 51/00
F 02 M 61/00
F 16 K 31/06

The present search report has been drawn up for all claims

| Place of search <br> BERLIN | Date of completion of the search <br> 07-10-1983 | Examiner <br> NORDSTROEM U.L.N. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82